(19) Europäisches Patentamt
European Patent Office
Office européen des brevets

(11) **EP 1 918 850 A2**

(12) **EUROPEAN PATENT APPLICATION**

(43) Date of publication:
**07.05.2008 Bulletin 2008/19**

(51) Int Cl.:
*G06K 9/00* *(2006.01)*    *G06K 9/62* *(2006.01)*
*G06K 9/46* *(2006.01)*    *G06K 9/56* *(2006.01)*

(21) Application number: **07020828.5**

(22) Date of filing: **24.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **02.11.2006 US 556082**

(71) Applicant: **Seiko Epson Corporation**
**Shinjuku-ku**
**Tokyo 163-0811 (JP)**

(72) Inventors:
• **Zhou, Hui**
**Toronto**
**Ontario M4J 1W9 (CA)**
• **Lu, Juwei**
**Toronto**
**Ontario M5V 3M3 (CA)**

(74) Representative: **Grünecker, Kinkeldey,**
**Stockmair & Schwanhäusser**
**Anwaltssozietät**
**Maximilianstrasse 58**
**80538 München (DE)**

(54) **Method and apparatus for detecting faces in digital images**

(57)    A method of detecting faces in a digital image comprises selecting a sub-window of the digital image. Sample regions of the sub-window are then selected. The sample regions are analyzed to determine if the sub-window likely represents a face.

**FIG. 8**

## Description

### Field of the Invention

The present invention relates generally to image processing and in particular, to a method and apparatus for detecting faces in digital images.

### Background of the Invention

Classification and recognition systems routinely process digital images to detect features therein, such as for example faces. Detecting faces in digital images is a two-class (face or non-face) classification problem involving pattern recognition. Recognizing patterns representing faces however presents challenges as patterns representing faces often have large variances between them and are usually highly complex, due to variations in facial appearance, lighting, expressions, and other factors. As a result, approaches used to detect faces in images have become very complex in an effort to improve accuracy.

For example, learning-based approaches to detect faces in images that employ cascades of face/non-face classifiers have been proposed. These learning-based approaches learn weak classifiers through an image-training process and use the learned weak classifiers to build stronger classifiers. One learning-based approach is the AdaBoost technique, as proposed in the publication entitled "Asymmetric AdaBoost and a detection cascade" authored by P. Viola and M. Jones, Proc. Of Neural Information Processing Systems, Vancouver, Canada, December 2001. The AdaBoost technique is particularly suited to recognizing patterns in highly complex classifiers. The AdaBoost technique learns a sequence of weak classifiers, and boosts the ability of the weak classifiers to act as indicators by linearly combining the weak classifiers to build a single strong classifier. In order to combine linearly the weak classifiers, Haar or similar features are extracted from a small set of adjacent rectangular regions in each image being processed. All of the pixels in each region are analyzed, thus making this technique processor and time-intensive.

In spite of the evident advantages of learning-based face detection approaches, they are limited from achieving higher performance because weak classifiers become too weak in later stages of the cascade. Current learning-based approaches use bootstrapping to collect non-face examples (false alarms) that are used to re-train the classifiers. However, after the power of a strong classifier has reached a certain point, the non-face examples obtained by bootstrapping become very similar to face patterns and thus, can no longer serve to re-train the classifiers. It can be empirically shown that the classification error of Haar-like, feature-based weak classifiers approaches 50%, and therefore bootstrapping stops being effective in practice.

Other techniques for detecting faces in digital images have also been proposed. For example, U.S. Patent Application Publication No. 2004/0264744 to Zhang et al. discloses a method of face detection wherein a plurality of initial candidate windows within an image is established. For each initial candidate window, color space information is used to classify each pixel as either a skin-color pixel or a non-skin-color pixel. Based on the number of skin-color pixels and non-skin-color pixels, at least one candidate window is classified as a non-face window. A confidence score is determined for the classified candidate window, and based on the confidence score, further classification of at least one spatially neighboring candidate window can be selectively skipped.

U.S. Patent Application Publication No. 2004/0179719 to Chen et al. discloses a facial detection method and system wherein a series of cascaded tests are employed. Each of the tests discards non-face objects with high confidence and retains most of the faces. A first chromacity test discards non-skin-color pixels, such as saturated green-hued and blue-hued pixels. During a subsequent geometry test, pixels are grouped based on chromacity and checked for their geometry shape, size and location. During a subsequent grid pattern test, a mean grid pattern element image is compared to the remaining regions obtained from the geometry test. Sub-images that pass the grid pattern test are marked as candidate faces. Candidate faces are subsequently checked in a location test, wherein closely-spaced candidate faces are combined into a single candidate face.

U.S. Patent Application Publication No. 2005/0013479 to Xiao et al. discloses a multiple-stage face detection method. During a first stage, linear filtering is used to remove non-face-like portions within an image. In particular, the AdaBoost learning method is used to pre-filter the image. In a second stage, a boosting chain is adopted to combine boosting classifiers within a hierarchy "chain" structure. During a third stage, post-filtering using image pre-processing, SVM filtering and color filtering is performed.

U.S. Patent Application Publication No. 2005/0069208 to Morisada discloses a method for detecting faces in an image, wherein face candidates are selected using template matching. Each face candidate is then judged using pattern recognition via a support vector machine. Skin-colored regions of the image are identified and matched up with the face candidates to eliminate those that contain less than a desired level of skin coloring. Candidates that are deemed to represent non-faces are then removed.

U.S. Patent No. 5,870,138 to Smith et al. discloses a method and system for locating and substituting portions of images corresponding to face content. The images are analyzed colorimetrically to identify face features, such as the outline of the face, the lips, the eyes, etc. A tracking signal that contains feature extraction data corresponding to the position of the identified features is generated. If desired, a substitute face can replace the original face present in the images using the feature extraction data.

U.S. Patent No. 6,463,163 to Kresch discloses a system and method of face detection in which a candidate selector operates in conjunction with a face detector that verifies whether candidate regions selected by the candidate selector include, in fact, face content. The candidate selector includes a linear matched filter and a non-linear filter that operate in series to select the candidate regions from an input image. The linear matched filter performs a linear correlation on the input image using a filtering kernel to derive a correlation image. Regions of the input image that have a local maximum and have correlation values greater than a threshold correlation value are selected. The non-linear filter then examines contrast values from various sub-regions of the image regions that were selected by the linear matched filter to screen for suitable candidate regions. The face detector uses a neural network to determine whether the selected regions contain a face or not.

U.S. Patent No. 6,574,354 to Abdel-Mottaleb et al. discloses a system and method for detecting faces in images, wherein skin-colored pixels are grouped and the edges of the pixel groups are removed. The remaining grouped skin-colored pixels are analyzed to determine whether they include a face. The analysis includes the determination of the area of the bounding box of the pixel group, the aspect ratio, the ratio of detected skin color to the area of the bounding box, the orientation of elongated objects and the distance between the center of the bounding box and the center of mass of the area of the bounding box.

U.S. Patent No. 6,661,907 to Ho et al. discloses a method of detecting faces in images, wherein the images are segmented into regions of like color. Face detection analysis is performed only on skin-colored regions.

U.S.Patent No. 6,879,709 to Tian et al. discloses a system and method of detecting neutral expressionless faces in images. A face detector is used to detect the pose and position of a face in images and to find facial components. When a face is detected in an image, the detected face is normalized to a standard size face. Then a set of geometrical facial features and three histograms in zones of the mouth are extracted. The facial features are fed to a classifier and it is determined whether the detected face is a neutral expressionless one.

U.S. Patent Application Publication No. 2002/0191818 to Matsuo et al. discloses a facial detection method and system wherein edge extraction is performed on an image to produce an edge image. Partial images that are candidates to contain facial images are extracted from the edge image. Face detection is performed on the partial images using a learning dictionary to detect whether or not the partial images contain a facial image.

U.S. Patent Application Publication No. 2003/0053685 to Lestideau discloses a method of detecting faces in an image wherein segments of the image with a high probability of being human skin are identified. A bounding box is then determined for the identified segments. The features of areas within the bounding box are analyzed to determine if a high level of texture exists. If an area within the bounding box having a high level of texture is detected, that area is deemed not to represent a human face.

U.S. Patent Application Publication No. 2005/0147292 to Huang et al. discloses a face detection system and method for identifying a person depicted in an image and their face pose. Face regions are extracted and pre-processed, commencing with the normalization of the image. When a face is located in the image, the face is cropped. The face is then categorized according to the face pose and the face is abstracted using an eigenface approach.

Although the above references disclose various methods of face detection, improvements are desired. It is therefore an object of the present invention to provide a novel method and apparatus for detecting faces in digital images.

### Summary of the Invention

Accordingly, in one aspect there is provided a method for detecting faces in a digital image, comprising:

    selecting a sub-window of said digital image;
    selecting sample regions in said sub-window; and
    analyzing said sample regions to determine if said sub-window likely represents a face.

In one embodiment, the sample regions are rectangular. Prior to selecting the sample regions, the sub-window is divided into frames, each of the sample regions being located in a different one of the frames. The sample regions are offset from the borders of the frames and form a pattern.

The sub-window is panned across the image and for each position of the sub-window within the image, the selecting and analyzing is re-performed. After the sub-window has been panned across the image, the scale of the sub-window is adjusted and the panning and re-performing are repeated. The adjusting continues until the sub-window reaches a threshold minimum size.

During the analyzing, the sample regions are subjected to a series of processing stages to detect and confirm the existence of a face in the sub-window. The processing stages comprise at least skin color classification, edge magnitude classification and AdaBoost classification: The skin color classification is used to detect the existence of a face in the sub-window. The edge magnitude and AdaBoost classifications are used to confirm the existence of the face in the sub-window.

According to another aspect, there is provided an apparatus for detecting faces in a digital image, comprising:

a sub-window selector selecting a sub-window in said digital image;
a sample region selector selecting sample regions within said sub-window; and
a sample region analyzer analyzing said sample regions to determine if said sub-window likely represents a face.

According to yet another aspect, there is provided a computer-readable medium including a computer program for detecting faces in a digital image, said computer program comprising:

computer program code for selecting a sub-window of said digital image;
computer program code for sample regions in said sub-window; and
computer program code for analyzing said sample regions to determine if said sub-window likely represents a face.

According to yet another aspect, there is provided a method of detecting faces in a digital image, comprising:

selecting a sub-window of said digital image;
selecting areas of said sub-window;
dividing said areas of said sub-window into two-dimensional arrays of frames;
analyzing said two-dimensional arrays of frames to generate a feature for each said area; and
determining, using said features, if said sub-window likely represents a face.

In one embodiment, the areas are divided into at least four frames. Characteristics of pixels of each of the frames are thresholded to generate a binary map for each frame, and the features are generated by performing a function on the sums of the binary maps. The characteristics can be pixel intensities. Alternatively, the characteristics can be color or edge magnitude values of the pixels.

According to still yet another aspect, there is provided an apparatus for detecting faces in a digital image, comprising:

a sub-window selector selecting areas of a sub-window of said digital image, and dividing said areas of said sub-window into a two-dimensional array of frames; and
a sub-window analyzer analyzing said two-dimensional array of frames to generate a feature for each said area, and determining, using said features, if said sub-window likely represents a face.

According to still yet another aspect, there is provided a computer-readable medium including a computer program for detecting faces in a digital image, said computer program comprising:

computer program code for selecting a sub-window of said digital image;
computer program code for selecting areas of said sub-window;
computer program code for dividing said areas of said sub-window into a two-dimensional array of frames;
computer program code for analyzing said two-dimensional array of frames to generate a feature for each said area; and
computer program code for determining, using said features, if said sub-window likely represents a face.

The method and apparatus provide a fast approach for face detection in digital images. By analyzing sample regions representative of areas of sub-windows of a digital image, the computational cost can be reduced without significantly reducing accuracy. Further, by analyzing two-dimensional arrays of frames to generate features, fewer features can be utilized to classify sub-windows of images as face or non-face, thereby reducing processing requirements and time.

**Brief Description of the Drawings**

Embodiments will now be described more fully with reference to the accompanying drawings in which:

Figure 1 is a schematic diagram of an apparatus for detecting faces in digital images;

Figure 2 is a flowchart of the face detection method employed by the apparatus of Figure 1;
Figure 3 illustrates the parameters of a sub-window of a digital image to be analyzed during the face detection;
Figure 4 illustrates the frames of the sub-window shown in Figure 3;
Figure 5 illustrates the sub-window of Figure 4 applied on a skin-color map of a digital image;
Figure 6 illustrates the sub-window of Figure 4 applied on an edge map of the digital image of Figure 5;
Figure 7 illustrates templates applied to the frames of the sub-window;
Figure 8 illustrates six templates; and
Figure 9 is a flowchart of a Gentle AdaBoost-based classification method employed by the apparatus of Figure 1.

## Detailed Description of the Embodiments

In the following description, an embodiment of a method, apparatus and computer readable medium embodying a computer program for detecting faces in a digital image is provided. During the method, a number of sub-windows of different sizes and locations in an image are analyzed. In some cases, only a set of sample areas within the sub-windows are analyzed, thereby reducing the computational costs (that is, processing power and time). For each sub-window, the following classifiers are determined in a set of cascading stages to detect whether the sub-window includes a face: a skin-color-based classier, an edge magnitude-based classifier and a Gentle AdaBoost-based classifier. The first stage is computationally fast, or "cheap", and the processing requirements of each subsequent stage of tests increase. If, at any stage, it is determined that it is likely that the sub-window does not represent a face, analysis of the sub-window terminates so that analysis of the next sub-window can commence. A sub-window is determined to include a face only when it passes each of the three classifiers.

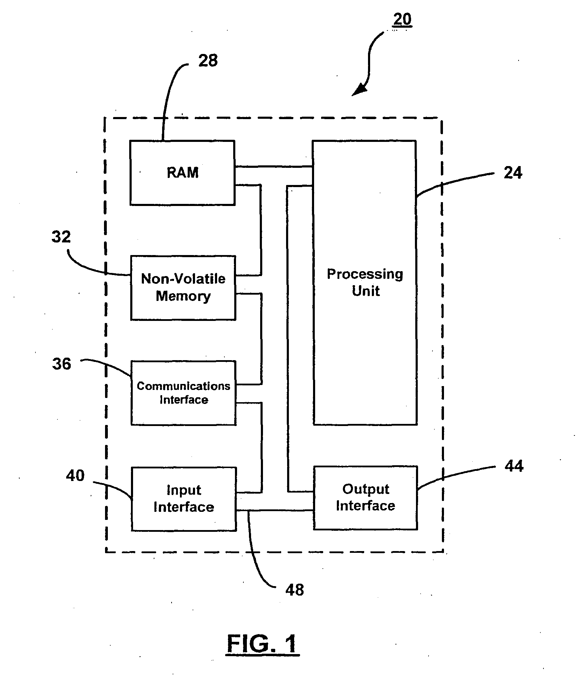

Turning now to Figure 1, an apparatus for detecting faces in digital images is shown and is generally identified by reference numeral 20. In this embodiment, the apparatus 20 is a personal computer or the like comprising a processing unit 24, random access memory ("RAM") 28, non-volatile memory 32, a communications interface 36, an input interface 40 and an output interface 44, all in communication over a local bus 48. The processing unit 24 executes a face detection application stored in the non-volatile memory 32. The apparatus 20 can be coupled to a network or server for storing images and face detection results via the communications interface 36. The input interface 40 includes a keypad, a mouse and/or other user input device to enable a user to interact with the face detection application. The input interface 40 can also include a scanner for capturing images to be analyzed for face detection. The output interface 44 includes a display for visually presenting the results of the face detection, if so desired, and can display settings of the face detection application to allow for their adjustment.

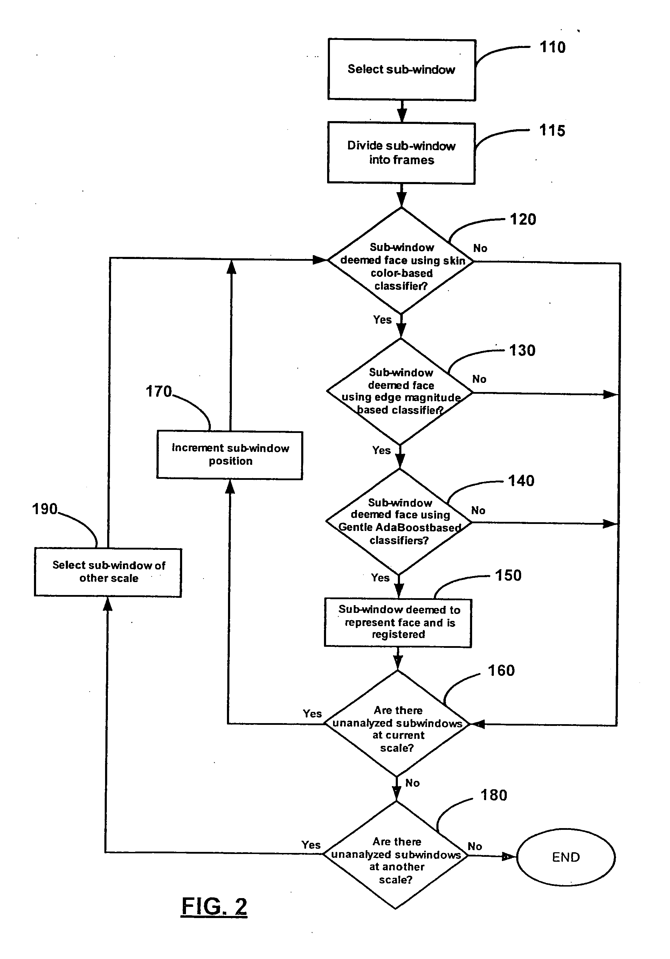

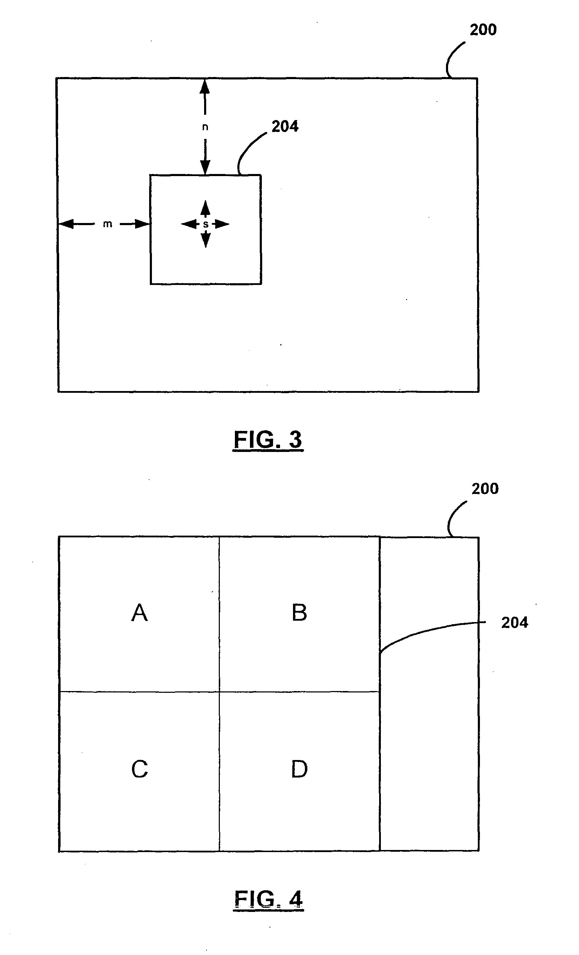

Turning now to Figures 2 to 4, the general steps performed by the apparatus 20 during execution of the face detection application in order to process an image to detect a face therein is shown. Initially, a sub-window of a particular scale is selected (step 110). The sub-window is of the form $x(m,n,s)$, where $m$ and $n$ represent the horizontal and vertical offset respectively, in pixels, from the upper left corner of the image, and s represents the scale of the sub-window. In this embodiment, the sub-window is square and the height and the width of the square are both equal to pixels. Figure 3 shows an example of a sub-window 204 relative to an image 200. The initial sub-window scale, s, that is selected is the maximum-sized square region that will fit in the image 200. That is, is set to the lesser of the height and width of the image, and m and n are initially set to zero (0). The sub-window 204 is then divided into a number of equal frames, in this example four (4) frames A to D as shown in Figure 4 (step 115). The sub-window 204 is then applied to the top left corner of the image 200 and the frames within the sub-window 204 are analyzed using a skin color-based classifier to determine if a face exists within the sub-window (step 120). If a face is located in the sub-window 204, the frames A to D within the sub-window are then analyzed using an edge magnitude-based classifier to confirm the existence of the face in the sub-window (step 130). If the existence of the face is confirmed, the frames A to D within the sub-window 204 are analyzed yet again using Gentle AdaBoost-based classifiers to confirm the existence of the face in the sub-window (140). If the existence of the face is confirmed, the sub-window 204 is registered as encompassing a face (step 150).

A check is then made to determine if the sub-window 204 has been panned across the entire image 200 (step 160). If not, the position of the sub-window is incremented (step 170) and steps 120 to 160 are repeated for the new sub-window position. As will be appreciated, steps 120 to 160 are repeated for each possible sub-window position relative to the image 200.

If a face is deemed not to exist at step 120 or if the existence of a face in the sub-window 204 is not confirmed at steps 130 or 140, the process proceeds to step 160.

Once the sub-window 204 has been panned across the entire image, a check is made to determine whether sub-windows of other scales are available for selection (i.e., whether the sub-window is at its minimum size) (step 180). In this embodiment, the minimum sub-window size is equal to 17x 17 pixels. If the sub-window is not at its minimum size, the sub-window is reduced by 14%, rounded to the nearest integer (step 190) and steps 120 to 160 are repeated for that sub-window. The above process continues until no additional sub-windows of smaller scales are available for selection.

At step 120, during analysis of the frames within the sub-window 204, the red, green and blue ("RGB") values of each pixel within the frames of the sub-window 204 are fed into a binary Bayesian classifier. The binary Bayesian classifier determines the likelihood that each pixel represents skin or non-skin based on the RGB color values of the pixel.

The binary Bayesian classifier is trained using a sample set of sub-windows taken from training images. During training, each sub-window of each training image is manually classified as representing face or non-face and the pixels of the sub-windows are used to generate skin and non-skin histograms respectively. The histograms are three-dimensional arrays, with each dimension corresponding to one of the red R, green G and blue B pixel values in the RGB color space. In particular, the histograms are 32x32x32 in dimension. As training images are manually identified as representing or not representing skin, the appropriate skin or non-skin histogram is populated with the pixel values from the training images. These histograms are then used to compute the Bayesian probability of pixel color values resulting from skin and non-skin subjects. In particular, the probability $P(z \mid skin)$ that a particular pixel color value, $z$, results from skin is given by:

$$P(z \mid skin) = \frac{H_s(z)}{N_s}$$

where:

$H_s(z)$ is the number of pixels in the skin histogram built from the set of training images in the same RGB bin as the pixel being analyzed; and

$N_s$ is the total number of pixels contained in the skin histogram. Correspondingly, the probability $P(z \mid non\text{-}skin)$ that a particular color value, $z$, results from non-skin is given by:

$$P(z \mid non - skin) = \frac{H_n(z)}{N_n}$$

where:

$H_n(z)$ is the number of pixels in the non-skin histogram built from the set of training images in the same RGB bin as the pixel being analyzed; and

$N_n$ is the total number of pixels contained in the non-skin histogram.

Using the above two probabilities, the Bayesian classifier for each pixel is:

$$g(z) = \begin{cases} 1, if \ \dfrac{p(z \mid skin)}{p(z \mid non - skin)} > \theta_g, \\ 0, otherwise \end{cases}$$

where:

$\theta_g$ is a threshold that can be used to adjust the trade-off between correct skin detects and false positives.

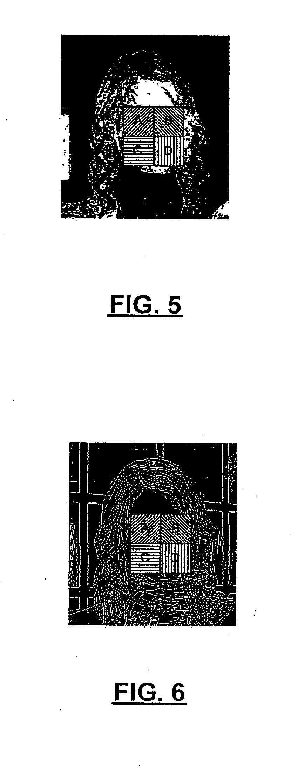

A binary skin/non-skin color map is thus generated for the sub-window 204, with pixels deemed to represent skin being assigned a value of one (1) and pixels deemed to represent non-skin being assigned a value of zero (0). Figure 5 illustrates the sub-window 204 applied on a skin-color map of a digital image.

Seven sum-based scalar features $f_1$ to $f_7$ are then calculated for the sub-window 204 as follows:

$$f_1 = sum(A) + sum(B) + sum(C) + sum(D) \qquad (Eq.1)$$

$$f_2 = sum(A) + sum(C) \qquad (Eq.2)$$

$$f_3 = sum(B) + sum(D) \qquad (Eq.3)$$

$$f_4 = |sum(A) + sum(C) - sum(B) - sum(D)| \qquad (Eq.4)$$

$$f_5 = sum(A) + sum(B) \qquad (Eq.5)$$

$$f_6 = sum(C) + sum(D) \qquad (Eq.6)$$

$$f_7 = |sum(A) + sum(B) - sum(C) - sum(D)| \qquad (Eq.7)$$

where:

$sum(Z)$ denotes the sum of the pixel values $g(z)$ of the skin-color map corresponding to frame $Z$.

The scalar features $f_1$ to $f_7$ are efficiently calculated using a summed-area table or integral image of the skin-color map. The scalar features $f_1$ to $f_7$ are used to classify the sub-window 204 by comparing each of them to a corresponding threshold. That is,

$$f_i(x) \begin{cases} \geq \theta_i \Rightarrow facepattern \\ < \theta_i \Rightarrow non-facepattern \end{cases}$$

where:

$\theta_i$ is a threshold determined by evaluating training data. During the comparing, the scalar features $f_1$ to $f_7$ are compared to their respective thresholds in a cascaded manner in order from scalar feature $f_1$ to scalar feature $f_7$. If any one of the scalar features for the sub-window 204 fails to meet its respective threshold, the sub-window 204 is deemed to represent a non-face and the determination of the remaining scalar features and other classifiers is aborted.

If the sub-window 204 is deemed to represent a face using the skin-color-based classifier at step 120, the edge magnitude-based classifier is used to confirm the existence of the face at step 130 as previously described. During face confirmation at step 130, an edge magnitude map of the input image is generated using the edge magnitudes of each pixel. The edge magnitudes are determined using the first-order derivative:

$$s(I) = \sqrt{\left(\frac{\delta I}{\delta x}\right)^2 + \left(\frac{\delta I}{\delta y}\right)^2}$$

In this embodiment, a Sobel edge detection technique is employed. The Sobel edge detection technique uses a $3 \times 3$ pixel kernel to determine the edge magnitude for each pixel in the sub-window 204 based on the intensity value of the pixel in relation to the intensity values of its eight adjacent pixels. The result is an edge magnitude map that includes edge magnitude values for each pixel in the digital image.

Figure 6 illustrates the sub-window 204 applied on a binary edge magnitude map of the digital image of Figure 5. The binary edge magnitude map is obtained by determining, for each pixel,

$$e(I) = \begin{cases} 1, \text{if } s(I) \geq \theta_e \\ 0, \text{otherwise} \end{cases},$$

where:

$s(I)$ is the edge magnitude of the pixel; and
$\theta_e$ is an adjustable threshold.

Given the edge magnitude map $e(x)$ of sub-window 204, the scalar features $f_1$ to $f_7$ are again calculated in series using the pixel values of the edge magnitude map. As each scalar feature is calculated, it is compared to a corresponding threshold. If any one of the calculated scalar features for the sub-window 204 fails to meet the respective threshold, the sub-window is deemed to represent a non-face and the determination of the remaining scalar features and the classifiers is aborted.

As mentioned above, if step 130 yields a sub-window 204 that is deemed to represent a face, the Gentle AdaBoost-based classifier is used at step 140 to confirm the result. Given a set of training images, the idea behind the Gentle AdaBoost-based technique is to identify weak but diverse classifiers for the training image set during a training phase, and then linearly combine the weak classifiers to form one or more strong classifiers. A backtrack mechanism is introduced to minimize the training error rate directly. This helps to remove inefficient weak classifiers and reduce the number of weak classifiers that are combined to build the strong classifier. Each weak classifier is associated with a single scalar feature in a sub-window of a training image. Scalar features are determined by calculating a weighted sum of pixel intensities in a particular area of the sub-window in accordance with templates. The classification of sub-windows based on the combination of the weak classifiers, in effect, is analogous to the fuzzy logic of pattern recognition performed by a human to recognize faces.

The basic form of discrete Gentle AdaBoost addresses two-class problems. A set of N labeled training images is given as $(x_1; y_1), ..., (x_N, y_N)$, where $y_i \in \{+1,-1\}$ is the class label for the training image set $x_i \in R^n$. Gentle AdaBoost assumes that a procedure is available for a learning sequence of weak classifiers $h_m(x)$ $(m = 1, 2,... , M)$ from the training image set, with respect to the distributions $w_j^{(m)}$ of the training image set.

The weak classifiers correspond to single scalar features generated using templates. The templates are chosen during the training phase using $20 \times 20$ pixel arrays. Thus, in order to determine scalar features for the sub-window 204, the sub-window is rescaled to $20 \times 20$ pixels and the templates are applied.

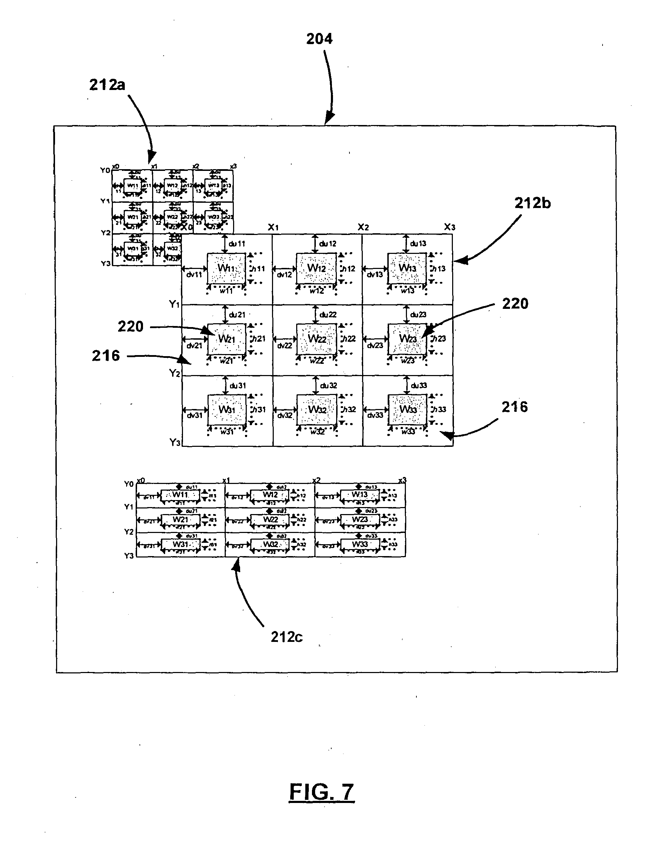

Figure 7 illustrates the sub-window 204 and three templates 212a, 212b and 212c associated with scalar features. Each template 212a, 212b, 212c is divided into nine 3x3 frames 216 and within each frame is located a rectangular sample region 220. The sample regions 220 thus form a grid pattern in the templates 212a, 212b, 212c: The template 212b is shown spanning the horizontal range from $X_0$ to $X_3$, and the vertical range from $Y_0$ to $Y_3$. The locations and dimensions of the nine rectangular sample regions, $\{W_{ij}\}_{i,j=1}^3$, are controlled by the following set of variables:

$\{X_k\}_{k=0}^3$, the x-coordinate of each dividing line between frames 216;

$\{Y_k\}_{k=0}^3$, the y-coordinate of each dividing line between frames 216;

$\{du_{ij}\}_{i,j=1}^3$, the vertical offset of the sample region 220 from the top of each frame;

$\{dv_{ij}\}_{i,j=1}^3$, the horizontal offset of the sample region 220 from the top of each frame;

$\{w_{ij}\}_{i,j=1}^3$, the width of each sample region; and

$\left\{h_{ij}\right\}_{i,j=1}^{3}$, the height of each sample region.

In the illustrated case, each sample region 220 is offset from the borders of its associated frame 216.

A scalar weighting factor, $B_{ij} \in R$, is associated with each sample region $\left\{W_{ij}\right\}_{i,j=1}^{3}$. The scalar feature of the sub-window 204 is computed by the linearly weighted combination of the sums of the intensity values of the pixels within the nine sample regions 220 specified by the template; that is:

$$f_n(\vartheta) = \sum_{i=i}^{3} \sum_{j=i}^{3} B_{ij} \cdot sum(W_{ij}), \qquad (Eq.8)$$

where:

$$\vartheta = \left\{ \left\{X_k\right\}_{k=0}^{3}, \left\{Y_k\right\}_{k=0}^{3}, \left\{du_{ij}\right\}_{i,j=1}^{3}, \left\{dv_{ij}\right\}_{i,j=1}^{3}, \left\{w_{ij}\right\}_{i,j=1}^{3}, \left\{h_{ij}\right\}_{i,j=1}^{3}, \left\{B_{ij}\right\}_{i,j=1}^{3} \right\}$$

is the set of all of the variables; and
$sum(W_{ij})$ denotes the sum across all pixels of the sample region $W_{ij}$.
The function $sum(W_{ij})$ can be computed efficiently from a summed-area table, such as described in the publication entitled "Summed-area tables for texture mapping" authored by F.Crow, SIGGGRAPH, 1984, vol. 18(3), pp. 207-212. Alternatively, the function $sum(W_{ij})$ can be computed efficiently from an integral image, such as described in the publication entitled "Robust real-time face detection" authored by Paul Viola and Michael J. Jones, International Journal of Computer Vision, vol. 57, May 2004, pp. 137-154. By varying the values of the variable set $\vartheta$, various scalar features can be generalized.

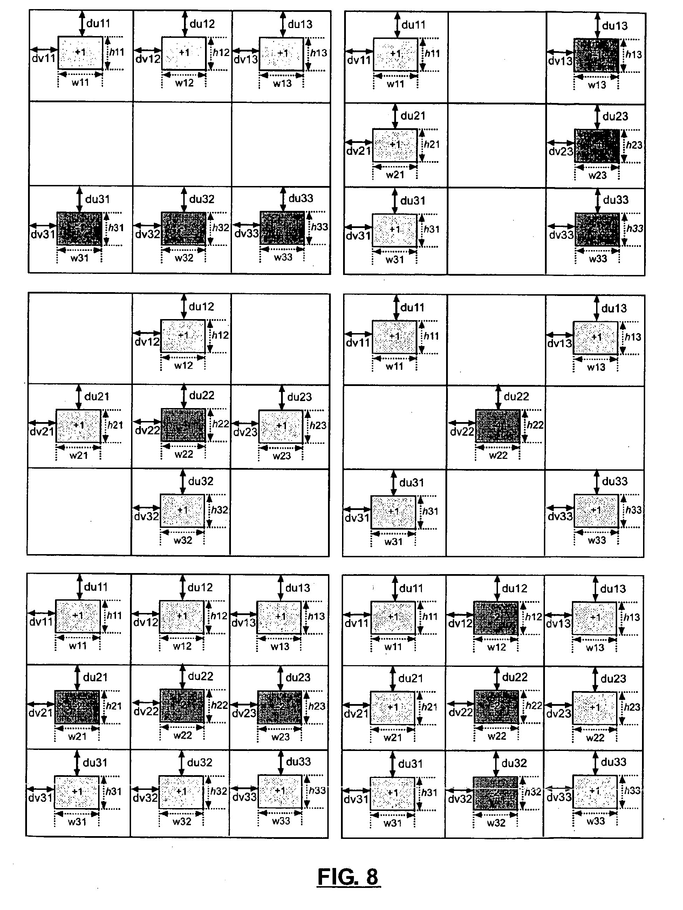

Figure 8 illustrates templates using various schemes of weighting factors, By, that are used to determine selected scalar features. Six of sixteen weighting schemes used by the apparatus 20 are shown. In this embodiment, three separate weighting factors are used: -1,0 and 1. As will be noted, the weighting factors, $B_{ij}$, for the sample regions, $W_{ij}$, in the templates satisfy the following equation:

$$\sum_{i=1}^{3} \sum_{j=1}^{3} B_{ij} \cdot Area(W_{ij}) = 0$$

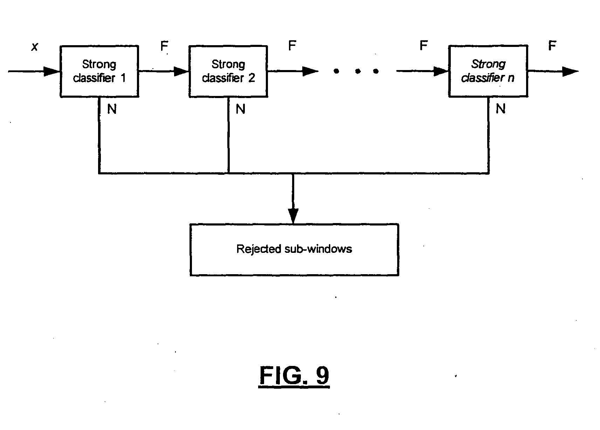

It can be seen from Equation 8 that nine pixel summations for the sample regions 220 are required to compute a single scalar feature. Thus, the computational complexity of the computed scalar features is 4.5 times higher than that of simple Haar-like features. As a result, the computed scalar feature set provides more information for face detection purposes.
Due to the complexity of the templates, image features that are more complex than an edge can be detected. Single Haar features only permit the detection of one-dimensional edges. As a result, the subject face detection approach can achieve the same accuracy as a Haar approach using a significantly reduced number of scalar features.
The strong classifiers are organized in a cascaded manner as shown in Figure 9. A boosted strong classifier effectively eliminates a large portion of non-face sub-windows 204 while maintaining a high detection rate for sub-windows that represent faces. In this cascading configuration, earlier strong classifiers have a lower number of weak classifiers and a higher false positive detection rate. During sub-window processing, sub-windows which fail to pass a strong classifier will not be further processed by the subsequent strong classifiers. Sub-windows 204 are considered to represent faces when they pass all of the n strong classifiers. The stages have increasing processing costs and levels of discernment. Thus, if a sub-window 204 fails the tests at any one stage, further processing resources and time are not wasted further analyzing the sub-window. This cascading strong classifier approach can significantly speed up the detection process and reduce false positives.
As mentioned above, the templates that are used to determine the scalar features are selected during the training phase. For a rescaled sub-window of 20x20 pixels in size, there are tens of thousands of possible scalar features. These scalar features form an over-complete scalar feature set for the sub-window. During the training phase, scalar features are generated using two-dimensional templates of various sizes, weighting schemes and locations and are applied to each sub-window classified by the human operator.

Each weak classifier $h_m(x)$ is associated with a single scalar feature $f_i$. Thus, the challenge of finding the best new weak classifier is equivalent to choosing the best corresponding scalar feature. A weak classifier is constructed by determining a Bayesian probability that the sub-window 204 represents a face based on histograms generated for sub-windows identified as representing face and non-face during training, much in the same manner in which the Bayesian probabilities are determined for the skin-color and edge magnitude classifiers. The Bayesian probability is then compared to a threshold that is determined by evaluating results of the particular scalar feature using the training set:

$$h_m(f_i, x_j) = \begin{cases} v_i^{(m)}, & \text{if } f_i \geq \theta_i \\ \mu_i^{(m)}, & \text{otherwise} \end{cases}, \text{ with } v_i, \mu_i \in [-1, 1],$$

$$v_i^{(m)} = \frac{W_+^r - W_-^r}{W_+^r + W_-^r},$$

$$\mu_i^{(m)} = \frac{W_+^l - W_-^l}{W_+^l + W_-^l},$$

$$W_+^r = \sum_{j:(y_j=1)\&(f_i(x_j)\geq\theta_i)} w_j^{(m)},$$

$$W_-^r = \sum_{j:(y_j=-1)\&(f_i(x_j)\geq\theta_i)} w_j^{(m)},$$

$$W_+^l = \sum_{j:(y_j=1)\&(f_i(x_j)<\theta_i)} w_j^{(m)},$$

$$W_+^l = \sum_{j:(y_j=-1)\&(f_i(x_j)<\theta_i)} w_j^{(m)}.$$

The strong classifier is built by linearly combining the M weak classifiers according to:

$$H_M(x) = \sum_{m=1}^{M} h_m(x) - \theta_b$$

where:

$\theta_b$ is the threshold controlling the tradeoff between detect rate and false positive.

The classification of x is obtained as $\hat{y}(x) = sign[H_M(x)]$ and the normalized confidence score is $|H_M(x)|$. The original form of $h_m(x)$ is a discrete function. Gentle AdaBoost is targeted at minimizing the following weighted least square error:

$$E(f_i) = \sum_{j=1}^{N} w_j^{(m)} (h_m(f_i, x_j) - y_j)^2$$

The parameters of $h_m$, together with the best scalar feature $f_i$, can be determined by minimizing the error:

$$f_* = arg \min_{f_i} E(f_i).$$

During the training phase, the parameters and location of the templates are varied, as are the weighting factors associated with each sample region of the templates. This is performed for each sub-window that is classified by the human operator. As will be understood, there is a large number of such variations, thereby providing an overly-complete scalar feature set. Due to the number of variations, the training phase requires a relatively long time.

All scalar features are prioritized based on association with sub-windows identified as representing faces. In order to generate the strong classifiers, weak classifiers are combined until a desired level of face identification is reached. For the first strong classifier, weak classifiers are combined in a weighted manner until a true positive rate of at least 98% and a false positive rate of at most 50% is achieved.

In order to determine subsequent strong classifiers, training sets comprising 20,000 faces and 20,000 non-faces that each have passed all of the previous strong classifiers are employed to determine sets of weak classifiers that are then prioritized again in the same manner. That is, in order to determine subsequent strong classifiers, new training sets are selected based on sub-windows that were classified as faces using the previous strong classifiers. Weak classifiers are then combined in a weighted manner until strong classifiers that have desired pass rates are determined. In this manner, Gentle AdaBoost learning is used to select the most significant scalar features from the proposed over-complete scalar feature set.

The generation of the training image sets for the generation of subsequent strong classifiers and the analysis of all possible scalar features can be very time-consuming. Once the weak classifiers used to generate the strong classifiers are selected during the training phase, however, analysis of sub-images thereafter is performed efficiently and with a desired level of accuracy. The analysis of sample regions of each frame of a sub-window, and not the entire frames, reduces the calculations required and, thus, reduces the processing time without a significant reduction in the accuracy of the results.

The face detection apparatus and method proposed herein combine several powerful techniques in image processing, pattern recognition and machine learning, such as color analysis, easy-to-compute scalar features and Gentle AdaBoost learning. These techniques are utilized to produce three individual face classifiers, which are organized in a cascaded manner. This allows the apparatus to use various available information, such as skin color, edge, and gray-scale based scalar features, to quickly identify faces in digital images with a desired level of accuracy.

Although an embodiment has been described above with reference to the figures, those of skill in the art will appreciate that variations are possible. For example, variance-based scalar features can be used in place of or to augment the sum-based scalar features described above. In this manner, the number of scalar features for use in face detection can be significantly increased. Also, while the entire sub-window has been described as being analyzed during skin-color and edge analysis of the sub-window, those of skill in the art will appreciate that only sample regions of the sub-windows can be analyzed without significantly reducing the accuracy of the classification of the sub-window.

The Gentle AdaBoost-based analysis can be performed using other characteristics of the sub-windows, such as color, edge orientation, edge magnitude, etc. Other forms of the AdaBoost method may also be employed in place of the Gentle AdaBoost method.

The templates used can include any number of different weighting factors. The characteristics of the frames and sample regions of a template can also be varied.

The proposed sum-based scalar features can be extracted from any two-dimensional signal, such as the color image, gray-scale image, the skin-color map of the color image, and the edge map of the color or gray-scale image. These scalar features are used in three component classifiers in the proposed face detection system: the skin-color-based classifier, the edge magnitude-based classifier, and the Gentle AdaBoost-based classifier.

The face detection application may run as a stand-alone digital image tool or may be incorporated into other available digital image processing applications to provide enhanced functionality to those digital image processing applications. The software application may include program modules including routines, programs, object components, data structures etc. and be embodied as computer-readable program code stored on a computer-readable medium. The computer-readable medium is any data storage device that can store data, which can thereafter be read by a computer system. Examples of computer-readable medium include for example read-only memory, random-access memory, hard disk drives, magnetic tape, CD-ROMs and other optical data storage devices. The computer-readable program code can also be distributed over a network including coupled computer systems so that the computer-readable program code is stored and executed in a distributed fashion.

Although particular embodiments have been described, those of skill in the art will appreciate that variations and modifications may be made without departing from the spirit and scope thereof as defined by the appended claims.

**Claims**

1.  A method of detecting faces in a digital image, comprising:

    selecting a sub-window of said digital image;
    selecting sample regions in said sub-window; and
    analyzing said sample regions to determine if said sub-window likely represents a face.

2.  The method of claim 1, wherein said sample regions are rectangular.

3.  The method of claim 1, further comprising:

    prior to selecting said sample regions, dividing said sub-window into frames, each of said sample regions being located in a different one of said frames.

4.  The method of claim 3, wherein said sample regions are offset from the borders of said frames.

5.  The method of claim 3, wherein said sub-window is divided into at least four frames.

6.  The method of claim 1, wherein said sample regions are in pre-determined locations in said sub-window.

7.  The method of claim 1, wherein said sample regions form a pattern.

8.  The method of claim 7, wherein said pattern is a grid pattern.

9.  The method of claim 1, wherein said analyzing comprises processing said features using an AdaBoost approach.

10. The method of claim 1, further comprising:

    panning said sub-window across said image; and
    for each position of said sub-window within said image, re-performing said selecting and analyzing.

11. The method of claim 10, further comprising:

    after the sub-window has been panned across said image, adjusting the scale of said sub-window, and repeating said panning and said re-performing.

12. The method of claim 11 wherein said adjusting is re-performed until said sub-window is scaled to a minimum threshold size.

13. The method of claim 11, wherein during said analyzing, said sample regions are subjected to a series of processing stages to detect and confirm the existence of a face in said sub-window.

14. The method of claim 13, wherein said processing stages at least comprise skin color classification, edge magnitude classification and Adaboost classification.

15. The method of claim 14 wherein skin color classification is used to detect the existence of a face in said sub-window.

**16.** The method of claim 15 wherein edge magnitude classification is used to confirm the existence of the face in said sub-window.

**17.** The method of claim 16 wherein AdaBoost classification is used to reconfirm the existence of the face in said sub-window.

**18.** An apparatus for detecting faces in a digital image, comprising:

a sub-window selector selecting a sub-window in said digital image;
a sample region selector selecting sample regions within said sub-window; and
a sample region analyzer analyzing said sample regions to determine if said sub-window likely represents a face.

**19.** An apparatus according to claim 18, wherein said sample region selector divides said sub-window into frames, and selects each of said sample regions from a different one of said frames.

**20.** An apparatus according to claim 19, wherein said sample regions are offset from the borders of said frames.

**21.** An apparatus according to claim 18, wherein said sample regions are in pre-determined locations in said sub-window.

**22.** An apparatus according to claim 19, wherein said sample regions are selected in a pattern.

**23.** An apparatus according to claim 22, wherein said pattern is a grid pattern.

**24.** An apparatus according to claim 19 wherein said sample region analyzer subjects said sample regions to a series of processing stages to detect and confirm the existence of a face in said sub-window.

**25.** An apparatus according to claim 24 wherein said series of processing stages comprises at least two of skin color classification, edge magnitude classification and AdaBoost classification.

**26.** A method of detecting faces in a digital image, comprising:

selecting a sub-window of said digital image;
selecting areas of said sub-window;
dividing said areas of said sub-window into two-dimensional arrays of frames;
analyzing said two-dimensional arrays of frames to generate a feature for each said area; and
determining, using said features, if said sub-window likely represents a face.

**27.** The method of claim 26, wherein said areas are divided into at least four frames.

**28.** The method of claim 27, wherein said analyzing comprises:

thresholding characteristics of pixels of each of said frames to generate a binary map for each frame; and
generating said features by performing a function on the sums of said binary map for each frame.

**29.** The method of claim 28, wherein said characteristics are pixel intensities.

**30.** The method of claim 28, wherein said characteristics are color values of said pixels.

**31.** The method of claim 28, wherein said characteristics are edge magnitude values of said pixels.

**FIG. 1**

**FIG. 2**

200

n

204

m

s

**FIG. 3**

200

| | |
|---|---|
| A | B |
| C | D |

204

**FIG. 4**

## FIG. 5

## FIG. 6

**FIG. 7**

**FIG. 8**

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040264744 A, Zhang
- US 20040179719 A, Chen
- US 20050013479 A, Xiao
- US 20050069208 A, Morisada
- US 5870138 A, Smith
- US 6463163 B, Kresch
- US 6574354 B, Abdel-Mottaleb
- US 6661907 B, Ho
- US 6879709 B, Tian
- US 20020191818 A, Matsuo
- US 20030053685 A, Lestideau
- US 20050147292 A, Huang

**Non-patent literature cited in the description**

- **P. VIOLA ; M. JONES.** Asymmetric AdaBoost and a detection cascade. *Proc. Of Neural Information Processing Systems,* December 2001
- **F.CROW.** Summed-area tables for texture mapping. *SIGGGRAPH,* 1984, vol. 18 (3), 207-212
- **PAUL VIOLA ; MICHAEL J. JONES.** Robust real-time face detection. *International Journal of Computer Vision,* May 2004, vol. 57, 137-154